# EUROPEAN PATENT APPLICATION

(11) **EP 0 812 095 A2**
(43) Date of publication of application: **10.12.1997**
(21) Application number: 97109228.3
(22) Date of filing: 06.06.1997
(51) Int. Cl.: H04M 1/72, H04Q 7/32

(54) **Communication terminal apparatus and mobile telephone battery for supplying power thereto**

(30) Priority: 07.06.1996 JP 146229/96
(71) Applicant: NTT MOBILE COMMUNICATIONS NETWORK INC., Minato-ku, Tokyo 105 (JP)
(72) Inventor: Yoshikawa, Kunio, Taito-ku, Tokyo 111 (JP); Sawai, Koichi, Yokohama-shi, Kanagawa 235 (JP)
(74) Representative: KUHNEN, WACKER & PARTNER

(57) **Abstract**

A communication terminal apparatus according to the present invention comprises an attachment portion (recess) C to which a mobile telephone equipped with a data input/output interface DT is detachably coupled, the attachment portion having a data input/output interface CN to be connected to the data input/output interface DT when the mobile telephone M is attached, a communication control circuit built therein and adapted to transmit and receive data to and from an external terminal equipment through the mobile telephone M, and a small-sized display for displaying information corresponding to the received data.

## Description

### BACKGROUND OF THE INVENTION

This invention relates to a communication terminal apparatus to be connected to a mobile telephone for performing a data communication such as facsimile communication and the like, and a mobile telephone battery for supplying power thereto.

Data communications through a telephone network such as facsimile communication and so-called personal computer communication are widely performed. On the other hand, in recent years, mobile telephones were widely enjoyed by users, in which a wireless communication is performed by users who carry a telephone hand-set. Under the circumstances, demands for using a mobile telephone not only as a mere voice-talk terminal but also as a communication terminal apparatus capable of performing a wide range of data communications are increasing.

In order to meet such demands, a system was proposed and practiced, in which a mobile telephone and a personal computer are connected to each other through a predetermined communication adapter or a communication card so that facsimile communications and other data communications can be performed. Also, makers proposed a mobile telephone equipped with an input/output interface for data communications, taking into consideration such use of the mobile telephones.

However, the above-mentioned conv entional systems eventually sacrifice mobility which the mobile telephones should have as one of their advantageous features. Although miniaturization of personal computers is progressing as seen in so-called notebook type personal computers, they are still far from satisfaction in respect of mobility when comparing the size and weight with the mobile telephones. Moreover, in order to perform a data communication using a mobile telephone in accordance with the conventional systems, it is necessary for a user to prepare a personal computer, a mobile telephone, and a special communication adapter (or communication card) and cable. It is not practical for the user to carry all of them. In addition, the work for connection of those devices is troublesome.

### SUMMARY OF THE INVENTION

The present invention has been accomplished on the above-mentioned background. It is, therefore, an object of the present invention to provide a communication terminal apparatus capable of easily performing a data communication using a mobile telephone without sacrificing mobility of the mobile telephone and also capable of displaying or causing an external display to display received data, and a mobile telephone battery for supplying power to the communication terminal apparatus.

In order to achieve the above object, a communication terminal apparatus according to the present invention comprises an attachment portion to which a mobile telephone equipped with a data output interface is detachably coupled, the attachment portion having a data input interface to be connected to the data output interface when the mobile telephone is attached, receiving means for receiving data transmitted from an external communication terminal equipment through the mobile telephone, memory means for storing the data received by the receiving means, read means for reading the data stored in the memory means, and display means for displaying information corresponding to the data read by the read means.

Preferably, the present invention comprises a data input/output interface corresponding to a mobile telephone capable of not only output of data but also input of data, and transmitting means for transmitting data to an external communication terminal equipment through a mobile telephone.

### BRIEF DESCRIPTION OF THE DRAWINGS

Fig. 1 is a plan view showing an outer appearance of a communication terminal apparatus according to one embodiment of the present invention;
Fig. 2 is a top plan view showing an outer appearance of the communication terminal apparatus of Fig. 1;
Fig. 3 is a side plan view showing an outer appearance of the communication terminal apparatus of Fig. 1;
Fig. 4 is a perspective view showing a configuration of a power output interface portion of a mobile telephone battery for supplying power to the communication terminal apparatus of Fig. 3;
Fig. 5 is a block diagram showing an electrical configuration of the communication terminal apparatus of Figs. 1 through 3;
Fig. 6 is a block diagram showing an electrical configuration of a communication control circuit of the communication terminal apparatus of Fig. 5;
Fig. 7 is a schematic view for showing one example of a displaying principle of a small-sized display of the communication terminal apparatus of Figs. 1 through 3;
Fig. 8 is a schematic view showing one example of a main menu screen appeared in the small-sized display;
Fig. 9 is a schematic view showing one example of a data list screen appeared in the small-sized display;
Fig. 10 is a schematic view showing one example of a menu screen appeared in the small-sized display;
Fig. 11 is a schematic view showing one example of a data input screen appeared in the small-sized display;
Fig. 12 is a schematic view showing one example of a data list screen appeared in the small-sized display;
Fig. 13 is a schematic view showing one example of a menu screen appeared in the small-sized display;
Fig. 14 is a schematic view showing one example of a network connected screen appeared in the small-sized display;
Fig. 15 is a schematic view showing one example of a character string information reference screen appeared in the small-sized display;
Fig. 16 is a schematic view showing one example of a visual image information reference screen appeared in the small-sized display;
Fig. 17 is a schematic view showing one example of a FAX menu screen appeared in the small-sized display;
Fig. 18 is a schematic view showing a modified embodiment of the first-described embodiment of the present invention;
Fig. 19 is a chart showing an electronic mail transmission sequence in another modified embodiment of the first-described embodiment of the present invention; and
Fig. 20 is a chart showing an electronic mail transmission sequence in a further modified embodiment of the first-described embodiment of the present invention.

### DETAILED DESCRIPTION OF THE PREFERRED EMBODIMENT

In order to facilitate an easy understanding of the present invention, one form for carrying out the present invention will be described hereinafter. It should be noted, however, that such form is merely one embodiment of the present invention, therefore, the present invention is, by no means, limited by this embodiment, and this embodiment can freely be modified within the scope of the present invention.

### A: Configuration of Embodiment

### (1) Outer Appearance

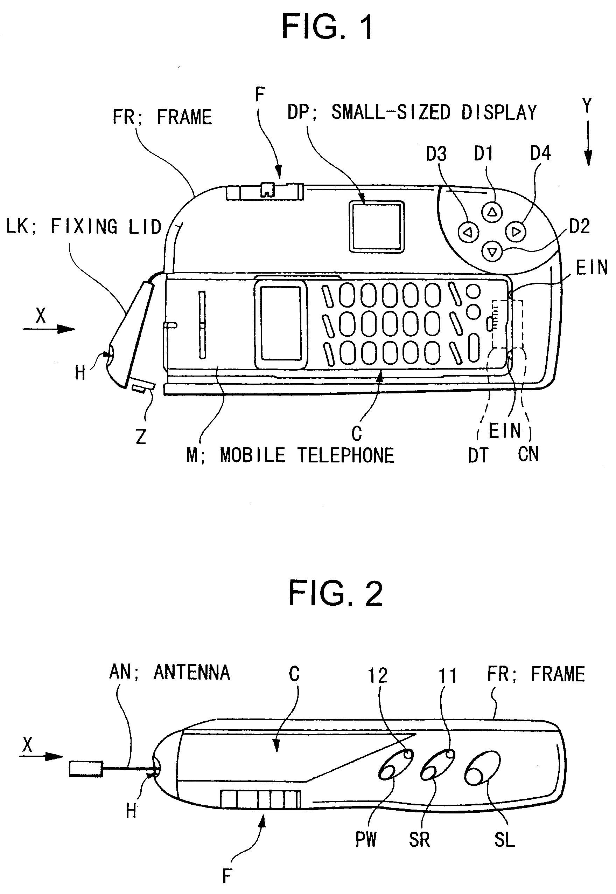

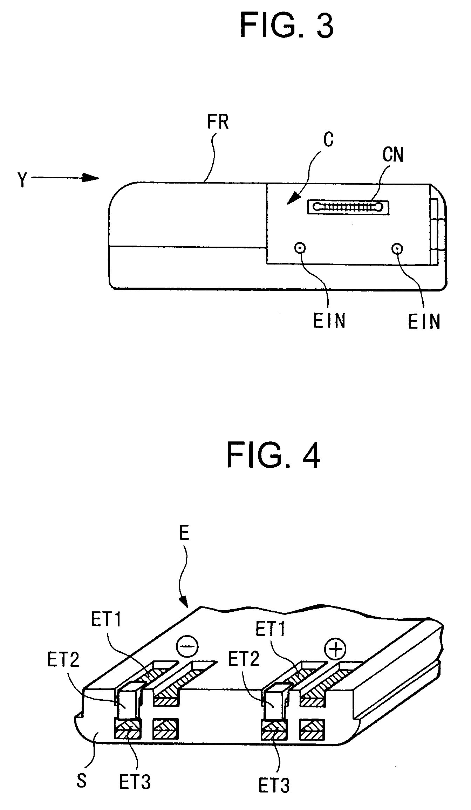

Figs. 1 through 3 are views showing an outer appearance of a communication terminal apparatus according to one embodiment of the present invention. Fig. 1 is a front view, Fig. 2 is a top view when viewed in a direction as indicated by an arrow Y of Fig. 1, and Fig. 3 is a side view when viewed in a direction as indicated by an arrow X of Fig. 1. In those figures, FR denotes a frame of a communication terminal apparatus in which a mobile telephone M is received. This frame FR is sized weighed as just enough to satisfy the minimum requirement for receiving the mobile telephone M, arrangement of various operation elements, building therein a circuit board, and the like.

The frame FR is provided with a recess C for receiving the mobile telephone M. An inner wall of the recess C is such contoured as being coincident with an outer configuration of the mobile telephone M. The mobile telephone M is inserted in a direction as indicated by the arrow X of Fig. 1 so as to be received in the recess C.

DP denotes a small-sized display consisting of an LED (Light Emitting Diode) array. The LED DP has a display area of 25 mm x 25 mm and a resolution of 864 (horizontal direction) x 280 (vertical direction) pixels, for example. The display DP has a display space capable of displaying a full copy of A4 size at a time. Aside from its ability for displaying various menu and character input screens, the display DP is capable of displaying facsimile data received and others. The display screen can be adjusted in focus within a predetermined range by properly operating a slider F. Displaying principles of the display DP is described later.

D1 through D4 denote cursor moving keys for moving a cursor in an upward, downward, rightward and leftward direction. Upon pressing selected one of the four keys D1 through D4, a cursor shown in the display DP is moved in an upward, downward, rightward, or leftward direction, so that a desired menu can be selected, or a desired character on a keyboard appeared in the character input screen can be selected. SL denotes a select key. By depressing the select key SL, a selection of a menu or a character on the keyboard where the cursor is located is firmly established. SR denotes a transmitting/receiving key used for instructing a transmission or receipt of data. The transmitting/receiving key SR is provided with a transmitting/receiving LED (Light Emitting Diode) 11 which is lighted up during the time for transmitting or receiving data.

PW denotes a power key for instructing ON/OFF of the supply of power.

Here, the communication terminal apparatus according to this embodiment has no power supply unit and it is designed to receive the supply of power from a battery E which the mobile telephone M is equipped with. For example, as shown in Fig. 4, the battery E is formed at its opposite end portions with power supply interface having a plus electrode and a minus electrode. The power supply interface include a supplying interface ET1 for supplying power to the mobile telephone M, a receiving interface ET2 for receiving power from a charger not shown, and in addition, a supplying interface ET3 for supplying power to the specific communication terminal apparatus. The interface ET1 and ET2 have the same configurations as the known mobile telephone batteries, but the remaining interface ET3 is formed, as illustrated, by fixing a conductive metal piece bent at right angles to one end of each battery E by means of soldering or the like. It is true that an end surface S of the battery E is exposed outside when the battery E is set to the mobile telephone M. And, when the mobile telephone M is further attached to the communication terminal apparatus, the exposed surface S of the battery E is brought into abutment with an inner wall of the recess C of the communication terminal apparatus. This causes the supplying interface ET 3 of the battery E and a power input interface EIN of the communication terminal apparatus to be contacted with each other.

The power key PW of Fig. 2 is adapted to control a switch (not shown) which is installed on a power supply line for leading a power supply from the power input interface EIN into the communication terminal apparatus. In accordance with a depression of the power key PW, the power supply can be turned on/off. The power key PW is provided with a power supply LED 12 which is lighted up during the ON-state of the power supply.

The mobile telephone M is provided on its lower end portion with a data input/output interface DT for inputting/outputting digital data (facsimile data or text data) which are sent/received between the mobile telephone M and an external communication terminal equipment (for example, facsimile machine, personal computer, other communication terminal apparatus according to this embodiment, etc.) through a digital radio network. The above communication terminal apparatus is provided on an inner wall of its recess C with a data input/output interface CN which is brought into engagement for electrical connection with the data input/output interface DT when the mobile telephone M is attached. Owing to this arrangement, the communication terminal apparatus can perform a data communication or facsimile communication through the mobile telephone M.

LK of Figs. 1 and 2 denotes a fixing lid for fixing the mobile telephone M received in the communication terminal apparatus so that a reliable attachment of the mobile telephone M is ensured. One end of the fixing lid LK is hinged to the frame FR and the other end is provided with a claw portion Z which is fixedly engaged with the frame FR. A through-hole H is formed in the fixing lid LK. This through-hole H is adapted to lead an antenna AN of the mobile telephone M received in the recess C outside the mobile telephone M.

### (2) Electrical Configuration

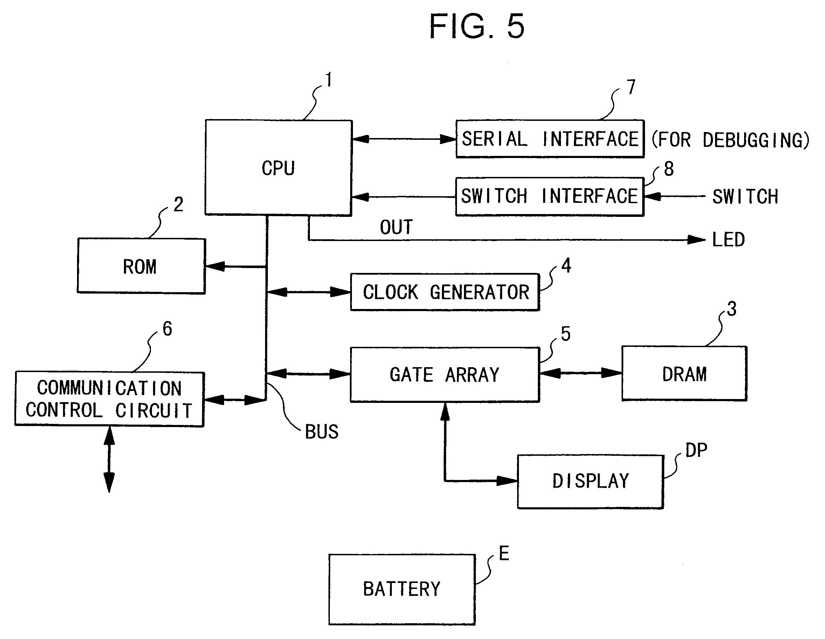

Fig. 5 is a block diagram showing an electrical configuration of a communication terminal apparatus according to this embodiment. In this Figure, reference numeral 1 denotes a CPU for controlling various parts of the communication terminal apparatus which are connected through a bus BUS. Reference numeral 2 denotes a ROM for storing therein a control program executed by the CPU 1 and various screen information. Reference numeral 3 denotes a DRAM which is used as a work area of the CPU 1 and adapted to store therein facsimile data and text data which are used for display or transmission. Reference numeral 4 denotes a clock generator for generating a clock signal so as to be supplied to the CPU 1. In accordance with this clock signal, various parts of the circuit are synchronized.

Reference numeral 5 denotes a gate array such as FPGA (Field Programmable Gate Array). This gate array 5 is programmed such that it undertakes a task for relaying a data delivery between the CPU 1 and the DRAM 3 and also serves as a control circuit for controlling the supply of display data to the display DP.

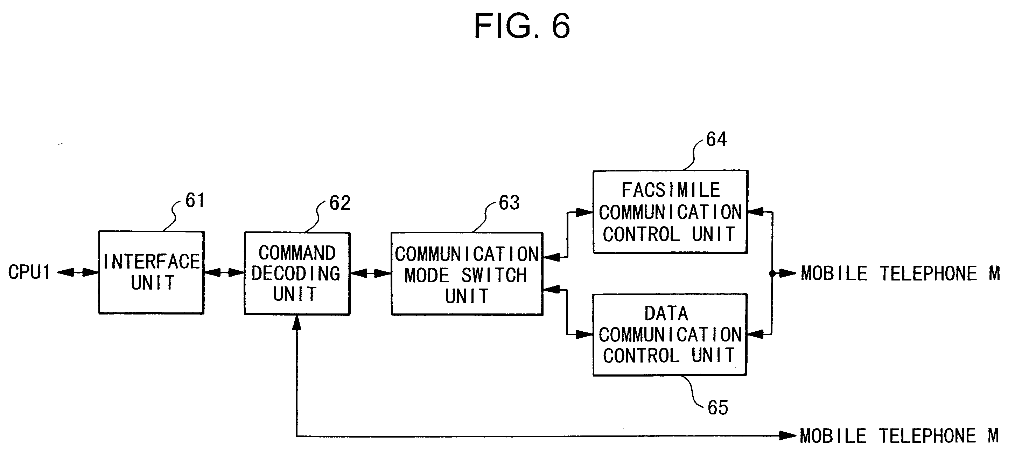

Reference numeral 6 denotes a communication control circuit. This communication control circuit 6 is adapted to control a facsimile communication and a data communication through a digital radio network through the mobile telephone M. The communication control circuit 6 comprises, as shown for example in Fig. 6, an interface unit 61, a command decoding unit 62, a communication mode switching unit 63, a facsimile communication control unit 64, and a data communication control unit 65.

The interface unit 61 undertakes a task for sending and receiving commands and data between the CPU 1 and the command decoding unit 62. The command decoding unit 62 decodes the commands supplied from the CPU 1 (or received from an external communication equipment terminal). The communication mode switching unit 63 switches the communication mode based on the output of the command decoding unit 62. That is, in this embodiment, there are two communication modes, one for a facsimile communication and the other for a data communication. When a command instructing a facsimile communication is supplied, the communication mode switching unit 63 switches the control to the facsimile communication control unit 64 and when a command instructing a data communication, it switches the control to the data communication control unit 65. The facsimile communication control unit 64 performs a task for controlling a communication protocol, a synchronization, and the like between an external communication terminal equipment (for example, facsimile machine, and other communication terminal equipment according to the present embodiment) and the apparatus of the present invention in such a manner to correspond to the facsimile communication, so that a facsimile communication can be performed through a digital radio network. On the other hand, the data communication control unit 65 performs a task for controlling a communication protocol, a synchronization, and the like between an external communication terminal equipment (for example, personal computer, and other communication terminal apparatus according to this embodiment) and the apparatus of the present invention in such a manner to correspond to a data communication in the format of text data, so that a data communication can be performed through a digital radio network.

Reference numeral 7 of Fig. 5 denotes a serial interface to which a personal computer, etc. (not shown) for developing a program is connected when a control program is debugged. That is, data of the control program corrected in the personal computer, etc. are transmitted to the CPU 1 through the serial interface 7, so that the CPU 1 rewrites the content of the ROM 2 based thereon. The serial interface 7 is used only on the occasion of emergency (or only in a limited case) such as manufacture, maintenance and the like. For this reason, the serial interface 7 is installed directly to a circuit board within the communication terminal apparatus and is not exposed to an outer surface of the frame FR.

Reference numeral 8 denotes a switching interface. The switching interface 8 detects the operation with respect to the cursor moving keys D1 through D4, select key SL, etc. and outputs operation data corresponding to such operation to the CPU 1. The output port OUT of the CPU 1 is connected with the transmitting/receiving LED 11 and the power LED 12. The CPU 1 controls the ON/OFF of these LEDs 11 and 12.

### (3) Displaying Principles of Small-sized Display DP

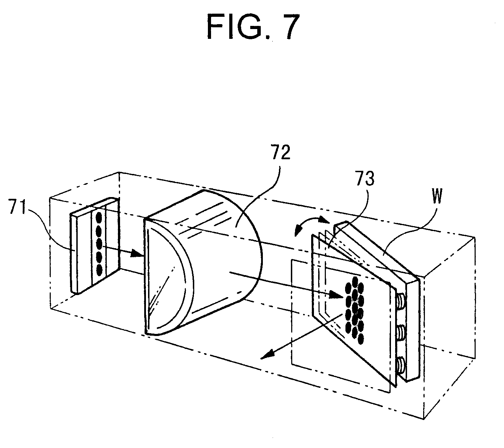

Fig. 7 is a schematic view for showing one example of a displaying principle of the small-sized display DP. As shown in this Figure, the display DP comprises a linear array of LEDs 71, a magnifying lens 72, and a minor 73 which is resonant vibrated by a counterbalanced weight W. A vertical line formed by the LED array 71 is enlarged by the magnifying lens 72 and then reflected towards the observer by the mirror 73. As the mirror 73 is resonant vibrated, the apparent location of the vertical line of the LED array 71 sweeps horizontally across the view field of the observer. It is strictly controlled such that the resonant vibration of the mirror 73 and the timing of light emission of the LED array 71 are synchronized. Owing to this arrangement, the line of the LEDs, which is, indeed, an instantaneous light emission from only one column of the screen (i.e., only one column of the screen is visible at any instant), is recognized by the observer as a full planar screen due to after image effect.

### B: Operation of the Embodiment

Operation of a communication terminal apparatus thus configured is described next.

When the mobile telephone M is attached to the communication terminal apparatus according to this embodiment, the power supply interface ET 3 of the battery E and the power input interface EIN of the communication terminal apparatus are connected to each other, and the data input/output interface DT of the mobile telephone M and the data input/output interface CN of the communication terminal apparatus are also connected to each other. Then, when the mobile telephone M is turned on and the power key PW of the communication terminal apparatus is depressed, power is supplied to the communication terminal apparatus. When power is supplied to the apparatus, the CPU 1 causes the power LED 12 to be lighted up and loads a control program from the ROM 2 in order to activate it. By doing so, the CPU 1 causes the display DP to display a menu screen therein based on image data stored in the ROM 2, so that various procedures such as facsimile communication, data input, transmitting/receiving of electronic mails, data display, and the like can be performed in accordance with the operator's menu selecting operation, etc. Those procedures are described, item by item, hereinafter.

### (1) Facsimile Communication

A facsimile communication is described first. The communication terminal apparatus transmits/receives facsimile data to and from an external facsimile machine (or other communication terminal apparatus according to this embodiment) connected to a common telephone network with the mobile telephone.

Transmitting and receiving procedures are separately described hereinafter.

### a) Transmission

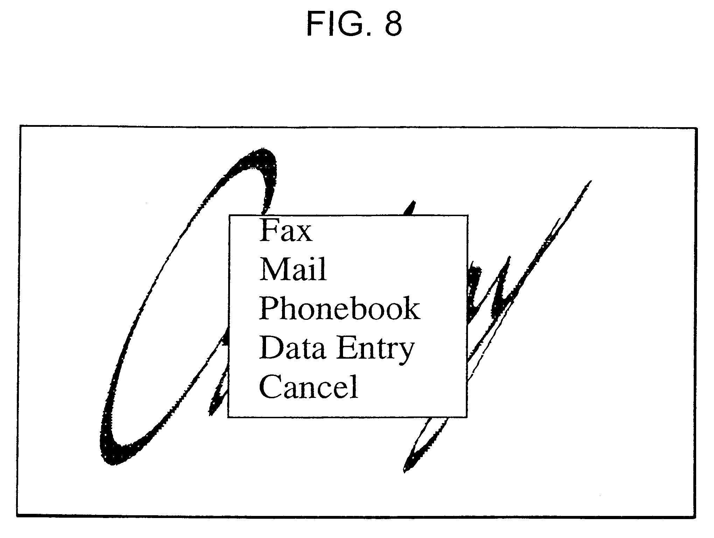

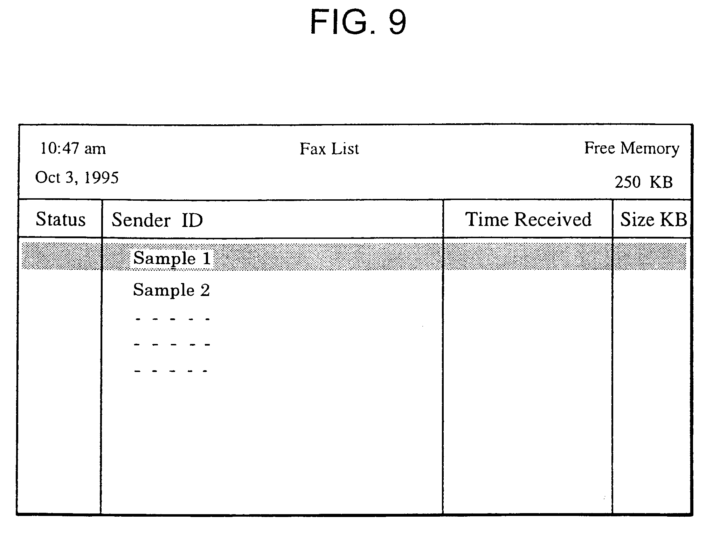

In the main menu screen of Fig. 8 displayed in the display DP, when the operator depresses the select key SL after the cursor is brought to the menu item "FAX" by properly operating the cursor moving keys D1 through D4, this selective operation is recognized by the CPU 1. As a consequence, the CPU 1 causes the display DP to display, as shown in Fig. 9, a list of identification elements (file names, etc.) of transmittable facsimile data stored in the DRAM 3. The terms "transmittable facsimile data" used herein refers to the data received from other facsimile machine, etc. in the past.

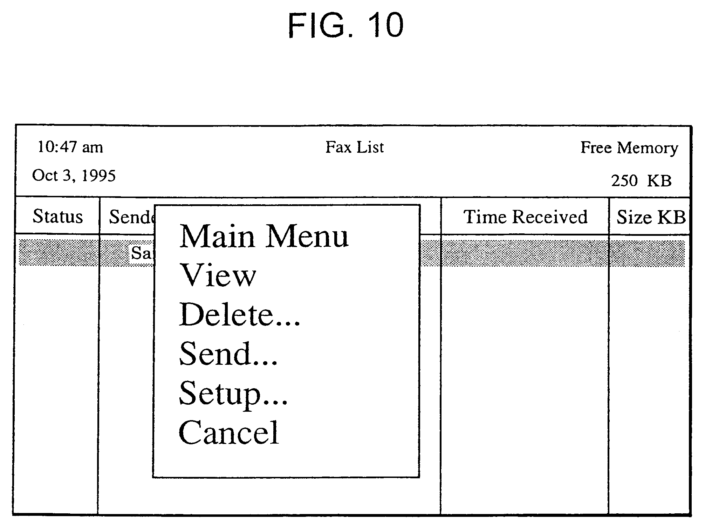

When the operator selects a desired data among the listed items displayed in the screen by properly operating the cursor moving keys D1 through D4 and the select key SL in the same manner as described above, the CPU 1 recognizes the selected facsimile data, reads the data from the DRAM 3 and causes the menu screen of Fig. 10 to be displayed.

In this menu screen, when the operator dials to an external facsimile machine, etc. by operating the mobile telephone M after the menu item "Send" is selected, and when the operator depresses the transmitting/receiving key SR thereafter, the communication line is connected by the acceptance of the call and a facsimile communication is established under the control of the communication control circuit 6. Then, the CPU 1 transmits the facsimile data read from the DRAM 3 to the communication control circuit 6. The data thus transferred are transmitted in the facsimile format under the control of the communication control circuit 6. By doing so, the transmitting procedure is finished. During the transmission of data, the CPU 1 causes the transmitting/receiving LED 11 to be lighted up, thereby notifying the operator of the fact that a communication is undergoing. The LED 11 is turned off when the transmitting procedure is finished.

### b) Receipt

On the other hand, when an outgoing call is issued from the external facsimile machine, etc., the communication line is automatically connected under the control of the communication control circuit 6 unless the mobile telephone M is busy, and a communication is established. Then, when facsimile data are dispatched, the data are received by the communication terminal apparatus through the mobile telephone M under the control of the communication control circuit 6. The data thus received are taken into the CPU 1 through the communication control circuit 6 and then transmitted to the DRAM 3 through the gate array 5 so that the data are temporarily stored therein. By doing so, the receiving procedure is finished. During the receiving procedure of data, the transmitting LED 11 is lighted up, and the LDE 11 is turned off when the receiving procedure is finished, in the same manner as in the transmitting procedure.

### (2) Data Input

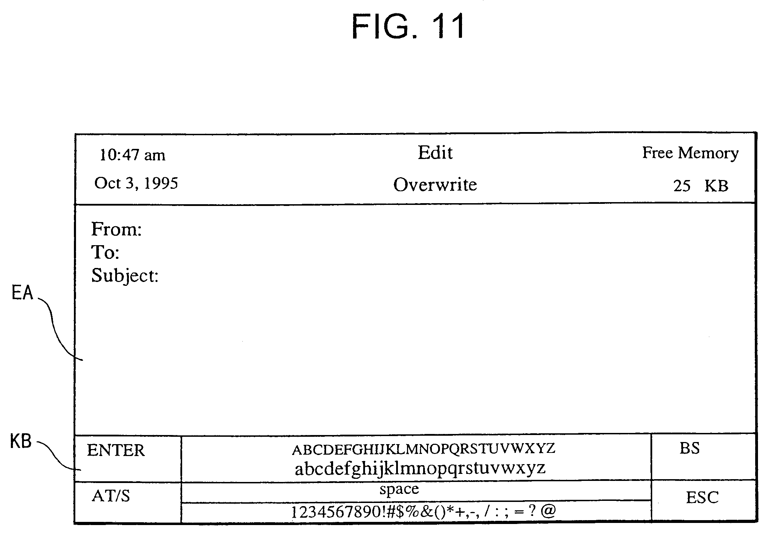

Data input is described next. When the operator selects the menu item "Data Entry" in the main menu screen as in the same manner as in the above-mentioned facsimile transmission, the CPU 1 recognizes this selection and causes a data input screen of Fig. 11 to be displayed based on the image data stored in the ROM 2. In this screen, the character input keyboard KB is displayed together with an edit area EA. When the operator selects desired characters in order from the keyboard KB by properly operating the cursor moving keys D1 through D4 and the select key SL in this data input screen, the CPU 1 recognizes this selection and causes corresponding text data to be displayed in the edit area EA. The text data thus input are stored in the DRAM 3 in accordance with the operator's input finish command.

### (3) Transmission and Receipt of Electronic Mail

Transmitting and receiving procedures of electronic mails are described next. Since there are transmission and receipt procedures like the above-mentioned facsimile communication, they are separately described.

### a) Transmission

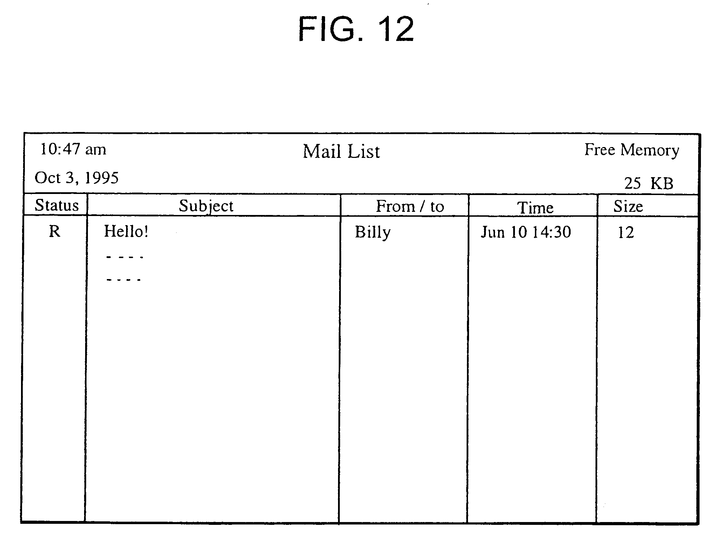

In the main menu screen of Fig. 8, when the operator selects the menu item "Mail", the CPU 1 recognizes this selection and causes the display DP to display, as shown in Fig. 12, a list of identification elements (file names, etc.) of transmittable text. The terms "transmittable text data" used herein refers to electronic mails received from other personal computer, etc., in the past or the text data input by means of the communication terminal apparatus.

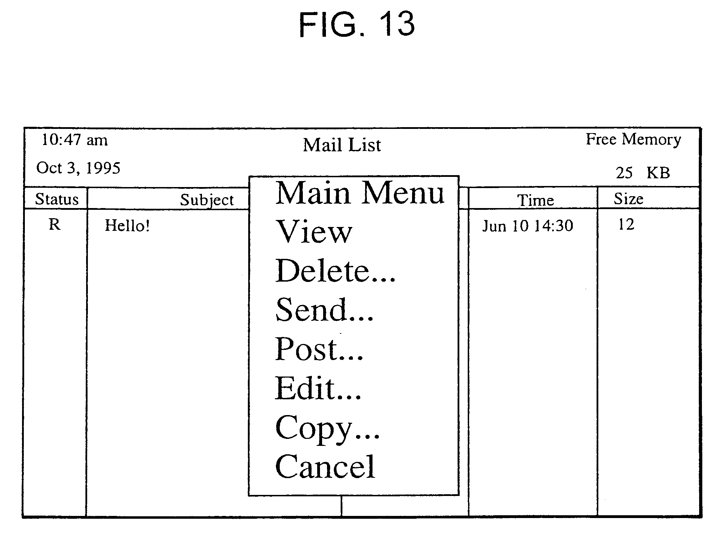

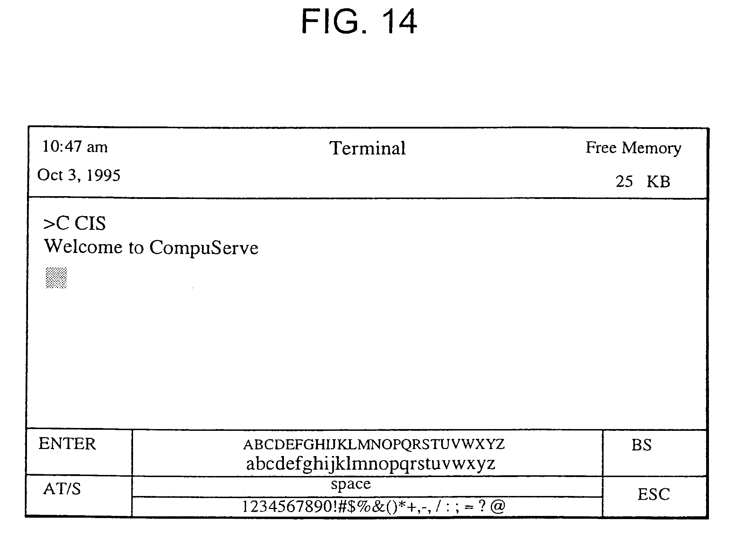

When the operator selects a desired data among the listed items displayed in the screen by properly operating the cursor moving keys D1 through D4 and the select key SL, the CPU 1 recognizes the selected text data file, reads the file from the DRAM 3 and causes the menu screen of Fig. 13 to be displayed. In this menu screen, when the operator selects the menu item "Send", the CPU 1 recognizes this selection and executes a predetermined sequence program in order to log in network as shown in Fig. 14. Then, when the operator depresses the transmitting/receiving key SR designating an address of the destination, the CPU 1 transmits the text data file thus selected to the communication control circuit 6. The text data file is uploaded in the mail box of the addressee under the control of the communication control circuit 6. By doing so, the transmission of an electronic mail is finished. In this case, the transmitting/receiving LED 11 is also lighted up during the transmission is undergoing, and the LED 11 is turned off when the transmission procedure is finished.

### b) Receipt

On the other hand, when the operator selects the menu item "Post" in the menu screen of Fig. 13, the CPU 1 recognizes this selection and executes a predetermined sequence program in order to log in network. Then, when the operator performs the required operation such as input of ID number, the communication terminal apparatus approaches a mail box of its own terminal through the mobile telephone M. Here, in case any electronic mail addressing its own terminal is uploaded, the identification element (file name, etc.) is listed. Then, when the operator selects a desired data among the displayed list by properly operating the cursor moving keys D1 through D4 and the select key SL and when the operator depresses the transmitting/receiving key SR, the CPU 1 recognizes this selection and outputs a request for transmitting the selected electronic mail. By doing so, the electronic mail thus selected is downloaded through the mobile telephone M under the control of the communication control circuit 6. The electronic mail thus downloaded, is transmitted from the communication control circuit 6 to the CPU 1, and then transmitted to the DRAM 3 through the gate array 5 so as to be stored in the DRAM 3. By doing so, the receiving procedure of electronic mail is finished. During the time the receiving procedure is undergoing, the transmitting LED 11 is also lighted up, and the LDE 11 is turned off when the receiving procedure is finished, in the same manner as in the transmitting procedure.

### (4) Data Display

Data display is described next. When the operator selects the menu item "View" in the main menu screen of Fig. 8, the CPU 1 recognizes this selection and causes the display DP to display a list of identification elements (file names, etc.) of the facsimile data and text data stored in the DRAM 3.

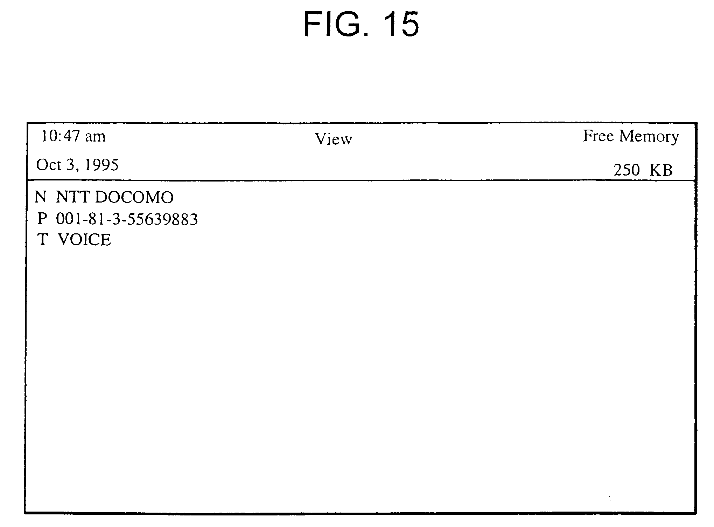

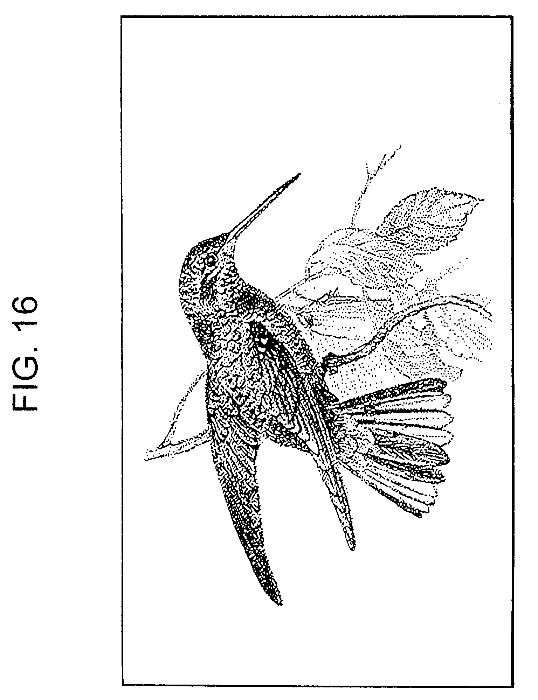

When the operator selects a desired data among this list by properly operating the cursor moving keys D1 through D4 and the select key SL, the CPU 1 reads corresponding data from the DRAM 3 and causes the display DP to display the data. By doing so, in case of text data, the reference screen of character string information is displayed as shown in Fig. 15, while, in case of facsimile data, the reference screen of image data is displayed as shown in Fig. 16.

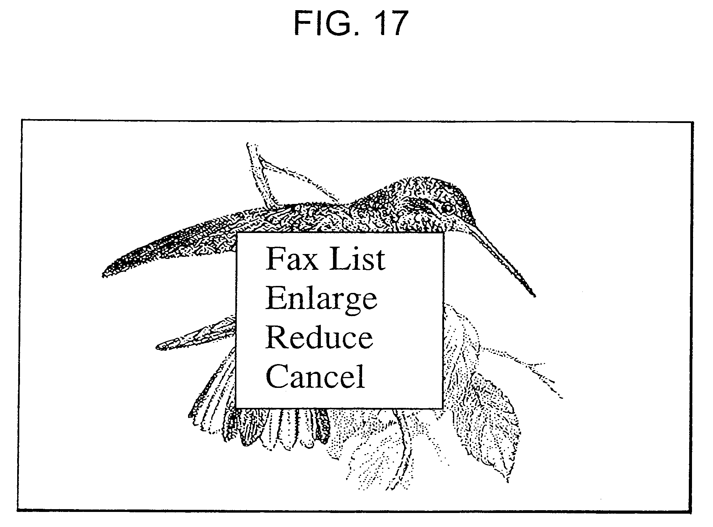

When the operator indicates a direction by properly operating the cursor moving keys D1 through D4 in the reference screen as shown, for example, in Fig. 16, the CPU 1 recognizes this selection and causes the screen to be scrolled in the indicated direction. When the operator merely depresses the select key SL, the menu screen of Fig. 17 appears. Then, when the operator selects the menu item "Enlarge" of Fig. 17, the CPU 1 recognizes this selection and magnifies the screen at a predetermined magnification rate. In contrast, when the operator selects the menu item "Reduce", the screen is reduced at a predetermined rate. By doing so, the operator can watch a desired position of the screen at a desired magnification rate.

### C: Effect of the Embodiment

In this way, according to a communication terminal apparatus of the embodiment of the present invention, the mobile telephone M can be used not only as a voice communication means but also as a data communication means of facsimile data and text data merely by attaching the mobile telephone M to the apparatus.

Also, according to the communication terminal apparatus of the present invention, the received facsimile data and text data can be displayed in the small-sized display DP. Moreover, the text data to be transmitted can be input and changed.

Furthermore, according to this embodiment, since the mobile telephone M is attached directly to the communication terminal apparatus and the communication terminal apparatus is made to have a compact design by incorporating therein the small-sized display DP, a set of a small number of operation keys, and the communication control circuit 6, the troublesome work for connection of component parts, as often experienced in the prior art devices, can be eliminated, the apparatus can easily be carried with and the mobility as one advantageous feature of the mobile telephone M is not sacrificed.

### D: Modified Embodiments

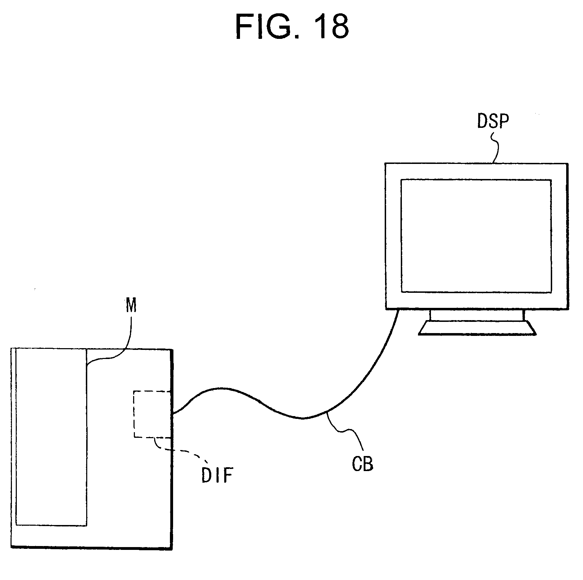

The present invention should not be limited to the above-mentioned embodiment. It can be modified in various ways as described, for example, hereinafter.
(1) That is, in the embodiment, the menu displayed in the small-sized display DP and the characters on the keyboard are selected by the cursor moving keys D1 through D4. It is an interesting alternative that the above selecting operation is performed by using some kind of pointing devices in order to reduce loads to the input operation.
(2) Also, in the embodiment, although a facsimile communication and an electronic mail are listed as one example, the present invention should not be limited to them. It can likewise be applied to various other forms of data communications. For example, with respect to the so-called personal computer communication, the present invention is not only applicable to the electronic mail in which the data prepared off-line is transmitted and received as in the above embodiment but also to something like an on-line chatting in which data are directly sent and received by the user of the terminal on-line.
(3) In the embodiment, power is supplied to the communication terminal apparatus from the battery set in the mobile telephone M in order to reduce the weight. In the alternative, the communication terminal apparatus itself may be provided with the power supply where increase of weight is allowed.
(4) With respect to data input/output between the mobile telephone M and the communication terminal apparatus, and power input/output between the battery E and the communication terminal apparatus, the present invention is not limited to the location and shape of the interface shown in Figs. 1, 3 and 4. They can appropriately be changed in accordance with necessity.
(5) The small-sized display DP is one example of the display means according to the present invention. Other displays may be employed as long as they are capable of displaying an object to be displayed at a high resolution in a small display area. Also, as shown in Fig.18, the present invention may be designed such that the communication terminal apparatus is provided without display means but it is provided with a display interface DIF so that data are sent for display to an external display DSP such as CRT (Cathode Ray Tube) connected through a cable CB.
(6) Furthermore, different telephone numbers may be assigned to a telephone, a facsimile communication and an electronic mail with respect to a single communication terminal apparatus, so that the communication control can be switched in accordance with the telephone number of an incoming call. For example, the number in the lowest position of the telephone number is designed to have a meaning. If the number of the lowest position of the telephone number of the incoming call is "0", the line is connected as a voice talk by means of the mobile telephone M. If the number of the lowest position of the telephone number of the incoming call is "1", the control is switched to the facsimile communication control unit 64 by the communication mode switch unit 63 and the line is connected as a facsimile communication. If the number of the lowest position of the telephone number of the incoming call is "2", the control is switched to the data communication control unit 65 by means of the communication mode switch unit 63 and the line is connected as an electronic mail transmission. The telephone numbers can be designed to be differentiated as a whole as well as they are designed to have a meaning in a certain position like the above-mentioned example.
(7) In the above case (6), the electronic mail is not sent and received through the mail box unlike the embodiment but the mail is sent and received directly between the data terminal apparatuses. One example of such electronic mail transmission method is described hereinafter. In this example, since operation is different between a case where an electronic mail to be sent back is preliminarily prepared in the communication terminal apparatus on the incoming call side and a case where no such mail is preliminarily prepared, description is made separately.

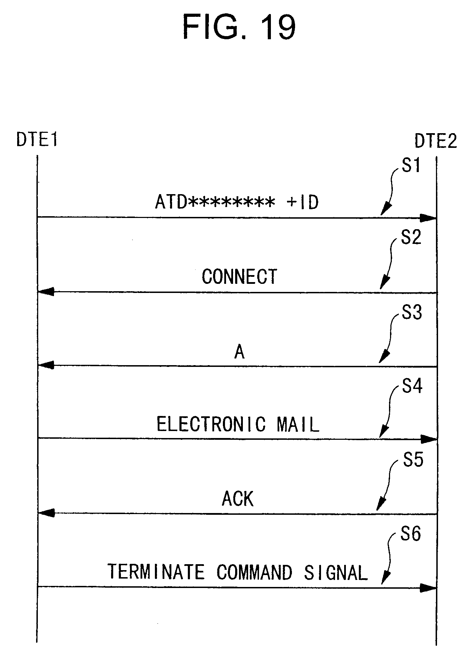

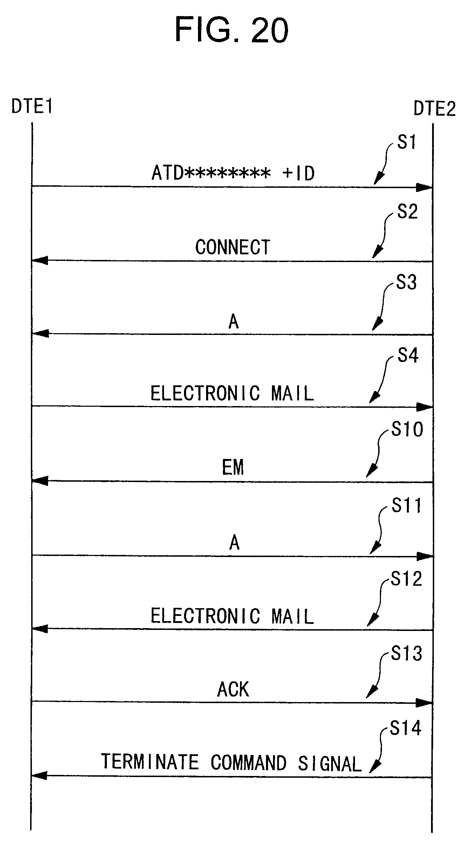

a) In Case Where No Electronic Mail to be Sent Back is Preliminarily Prepared in the Communication Terminal Apparatus on the Incoming Call Side
   Fig. 19 is a view showing an electronic mail transmission sequence in case where no electronic mail to be sent back is preliminarily prepared in the communication terminal apparatus DTE 2 on the incoming call side. This Figure shows an operation for transmitting an electronic mail from the outgoing call side to the incoming call side. For example, this corresponds to the operation when a superior in a certain company sends an electronic mail to a communication terminal apparatus DTE 2 of his business stuff outside the company using his own communication terminal apparatus DTE 1.
   First, when the superior selects an electronic mail to be sent back in the communication terminal apparatus DTE 1 and dials the telephone number "********" for electronic mail of the communication terminal apparatus DTE 2 of his business stuff as a counterpart of communication, the communication terminal apparatus DTE 1 sends the telephone number "********" added with the sender's ID to the digital network (Step 1). The character string "ATD" located before the telephone number is an AT command for instructing an outgoing call, but it can be varied depending on a command system of the communication terminal apparatus.
   Thereafter, an outgoing call control is performed in the digital network. As a consequence, when an incoming call is received in the mobile telephone M attached to the communication terminal apparatus DTE2 of the business stuff, the communication terminal apparatus DTE2 switches the control to the data communication control unit 65 and sends a command "CONNECT" for connecting the line for electronic mail transmission to the digital network (Step 2). The line connection is established when this command "CONNECT" is sent to the communication terminal apparatus DTE1.
   When the line connection is achieved, the communication terminal apparatus DTE2 starts preparation for receiving an electronic mail and sends a clear-to-send signal (A-signal) indicative of ready to receive an electronic mail to the communication terminal apparatus DTE 1 (Step S3). When the communication terminal apparatus DTE1 receives this electronic mail clear-to send signal, it sends the electronic mail to the communication terminal apparatus DTE 2 (Step 4). When the communication terminal apparatus DTE 2 has received the electronic mail, it sends an acknowledge signal (ACK signal) to the communication terminal apparatus DTE 1 (Step S5).
   When the communication terminal apparatus DTE 1 receives the acknowledge signal, it disconnects the line. Specifically, first, a terminate command signal is sent from the communication terminal apparatus DTE1 to the communication terminal apparatus DTE2 (Step S6). Thereafter, the line between the communication terminal apparatus DTE 1 and the communication terminal apparatus DTE2 is cut off in the digital network.
b) In Case Where an Electronic Mail to be Sent Back is Preliminarily Prepared in the Communication Terminal Apparatus on the Incoming Call Side
   Fig. 20 is a view showing an electronic mail transmission sequence in case where an electronic mail to be sent back is preliminarily prepared in the communication terminal apparatus DTE 2 on the incoming call side. This Figure shows an operation for sending an electronic mail from the communication terminal apparatus DTE 1 on the outgoing call side to the communication terminal apparatus DTE 2 on the incoming call side and sending back the electronic mail stored in the DRAM 3 of the communication terminal apparatus DTE 2 on the incoming call side to the outgoing call side. For example, this corresponds to an operation when the business stuff outside the company is preliminarily prepared a report in the communication equipment apparatus DTE2 in preparation to a request from his superior and the report is automatically be sent back as an electronic mail when such a request comes from the superior.

In Fig. 20, since the procedure up to Step S4 is the same as Fig. 19, description thereof is omitted.

After Step S4, when the communication terminal apparatus DTE2 on the incoming call side has received the electronic mail, it sends an acknowledge & request-to-send signal (EM signal) to the communication terminal apparatus DTE1 when the character string indicative of the sender in the header region of the received electronic mail is coincident with the character string indicative of the sender in the header region in the electronic mail (i.e., electronic mail preliminarily prepared for sending back) stored in a sending data buffer of the DRAM 3 in the DTE 2 (Step S10). When the communication terminal apparatus DTE1 receives the EM signal, it sends the clear-to-send signal (A-signal) to the communication terminal apparatus DTE2 (Step S11).

When the communication terminal apparatus DTE2 receives the A-signal, it sends the electronic mail to the communication terminal apparatus DTE1 (Step S12). The electronic mail to be sent out here is the electronic mail itself stored in the DRAM 3 in the communication terminal apparatus DTE2.

When the communication terminal apparatus DTE1 has received the electronic mail, it sends the acknowledge signal (ACK signal) to the communication terminal apparatus DTE2 (Step S13). When the communication terminal apparatus DTE2 receives the ACK signal, it deletes the electronic mail already sent out from the DRAM 3. Thereafter, the same steps as in Fig. 19 are performed and the line connection is cut off (Step S14). In this case, however, the line connection is cut off chiefly by the communication terminal apparatus DTE2 on the incoming call side. By doing so, electronic mails can be sent and received by both parties through a single call. Thus, the communication time can be reduced by the reduction of an overhead of an electronic mail.

## Claims

1. A communication terminal apparatus comprising:
an attachment portion to which a mobile telephone equipped with a data output interface is detachably coupled, said attachment portion having a data input interface to be connected to said data output interface when said mobile telephone is attached;
receiving means for receiving data transmitted from an external communication terminal equipment through said mobile telephone;
memory means for storing the data received by said receiving means;
read means for reading the data stored in said memory means; and
display means for displaying information corresponding to the data read by said read means.

2. A communication terminal apparatus comprising:
an attachment portion to which a mobile telephone equipped with a data input/output interface is detachably coupled, said attachment portion having a data input/output interface to be connected to said data input/output interface when said mobile telephone is attached;
receiving means for receiving data transmitted from an external communication terminal equipment through said mobile telephone;
memory means for storing the data received by said receiving means;
read means for reading the data stored in said memory means;
display means for displaying information corresponding to the data read by said read means; and
transmitting means for transmitting the data read by said read means to an external communication terminal equipment through said mobile telephone.

3. A communication terminal apparatus according to claim 1 or 2, wherein the data to be transmitted to and received from said external communication terminal equipment are facsimile data.

4. A communication terminal apparatus according to claim 1, wherein said receiving means has two receiving modes, one for receiving text data and the other for receiving facsimile data, and which further comprises switch means for switching said two receiving modes from one to the other.

5. A communication terminal apparatus according to claim 2, wherein said transmitting means and receiving means have two transmitting/receiving modes, one for transmitting/receiving the text data and the other for transmitting/receiving the facsimile data, and which further comprises switch means for switching said two transmitting/receiving modes from one to the other.

6. A communication terminal apparatus according to claim 4 or 5, wherein a telephone number is assigned to each of said receiving modes or transmitting/receiving modes in addition to a telephone number which is assigned to a voice communication through said mobile telephone; and
said switch means switches the receiving modes or transmitting/receiving modes from one to the other in accordance with a telephone number designated by a call.

7. A communication terminal apparatus according to claim 2, further comprising:
input means for inputting the data to be transmitting to said external communication terminal equipment; and
write means for writing the data input by said input means in said memory means.

8. A communication terminal apparatus according to claim 1 or 2, wherein said attachment portion is equipped with power input means for taking therein power from said mobile telephone when said mobile telephone is attached; and
which is activated by the power from said mobile telephone.

9. A communication terminal apparatus according to claim 1 or 2, which comprises, instead of said display means, interface means for outputting the data read by said read means to an external display.

10. A battery to be set into a mobile telephone which is attached to said communication terminal apparatus according to claim 8 and adapted to supply power to said mobile telephone,
said battery comprising a power supply interface to be connected to a power input interface of said communication terminal apparatus when said mobile telephone is attached.
